# EUROPÄISCHE PATENTSCHRIFT

(11) **EP 1 433 656 B1**
(45) Veröffentlichungstag und Bekanntmachung des Hinweises auf die Patenterteilung: **16.03.2011**
(21) Anmeldenummer: 03013114.8
(22) Anmeldetag: 11.06.2003
(51) Int. Cl.: B60Q 1/14

(54) **Einrichtung zum automatischen Schalten von Beleuchtungseinrichtungen bei Fahrzeugen**
Device for automatic switching of vehicle lighting devices
Dispositif d'allumage automatique de dispositifs d'éclairage de véhicules

(30) Priorität: 23.12.2002 DE 10261924
(43) Veröffentlichungstag der Anmeldung: 30.06.2004
(73) Patentinhaber: ROBERT BOSCH GMBH, 70442 Stuttgart (DE)
(72) Erfinder: Schmitt, Patrick, 77839 Lichtenau (DE); Hodapp, Bruno, 77855 Achern-Oensbach (DE); Meier, Hans, 77833 Ottersweier (DE); Blitzke, Henry, 77815 Buehl (DE)

(56) Entgegenhaltungen:
- WO-A1-01/51313
- DE-A1- 19 523 262
- DE-A1- 19 740 928
- DE-A1- 19 957 210
- US-A- 5 451 822

## Beschreibung

Die Erfindung betrifft eine Einrichtung zum automatischen Schalten von Beleuchtungseinrichtungen bei einem Fahrzeug mit einer Sensoreinrichtung, umfassend wenigstens einen Richtungssensor zur gerichteten Erfassung der Lichtverhältnisse in Fahrtrichtung des Fahrzeugs und wenigstens einen Globalsensor zur ungerichteten Erfassung der allgemeinen Lichtverhältnisse in der Umgebung des Fahrzeugs, sowie mit einer mit der Sensoreinrichtung verbundenen Auswerteeinrichtung zur Ermittlung auf Grundlage der erfassten Lichtverhältnisse, ob eine Schaltzustandsänderung der Beleuchtungseinrichtungen erforderlich ist, wobei die Auswerteeinrichtung Digitalisierungsmittel umfasst zur Digitalisierung wenigstens des Richtungssensorsignals gemäß einer in Speichermitteln der Auswerteeinrichtung gespeicherten ersten A/D-Wandlungskennlinie.

### Stand der Technik

Aus der DE 195 23 262 A1 ist eine gattungsgemäße Einrichtung zum automatischen Schalten von Beleuchtungseinrichtungen von Fahrzeugen bekannt. Derartige Einrichtungen werden verwendet, um den Fahrer eines Kraftfahrzeugs von der manuellen Anpassung der Beleuchtungseinrichtungen seines Fahrzeuges an die aktuellen Lichtverhältnisse der Fahrzeugumgebung zu entlasten. Damit soll nicht nur sichergestellt werden, dass bei wetterbedingter oder zeitlich bedingter Verschlechterung der Lichtverhältnisse, die Fahrzeugscheinwerfer rechtzeitig eingeschaltet werden, sondern auch, dass das Einschalten der Fahrlichter beim Einfahren in Tunnel, Tiefgaragen etc. gewährleist ist, was häufig aus Bequemlichkeit unterlassen wird und dann zu entsprechenden Sicherheitsmängeln führt.

Eine wesentliche Schwierigkeit besteht darin, einerseits sicherzustellen, dass in Situationen, die etwa dem Einfahren in einen Tunnel entsprechen, das Licht zuverlässig und frühzeitig eingeschalten wird, gleichzeitig jedoch zu vermeiden, dass kurzfristige Abschattungen des Fahrzeuges, beispielsweise durch Brücken, Unterführungen, Bäume etc., zu einem in solchen Situationen überflüssigen Einund kurz darauf folgendem Ausschalten der Fahrzeugbeleuchtung führen. Zur Vermeidung dieses unerwünschten "Blinkeffektes" schlägt die zitierte Druckschrift vor, wenigstens zwei Sensoren zu verwenden, von denen ein Globalsensor die Lichtverhältnisse in der unmittelbaren Umgebung des Fahrzeuges in ungerichteter Weise erfasst und ein Richtungssensor gezielt die Lichtverhältnisse in Fahrtrichtung voraus des Fahrzeuges erfasst. Durch gemeinsame Auswertung beider Sensorsignale kann grundsätzlich zwischen "Tunnel" und "Brücke" unterschieden werden. Beispielsweise meldet bei Anfahrt auf eine Brücke der Richtungssensor bei allgemeinen hellen Tageslichtbedingungen zunächst "dunkel voraus" während der Globalsensor noch "hell" meldet. Fährt das Fahrzeug in den Schatten der Brücke ein, meldet der Globalsensor "dunkel" während der Richtungssensor, der bereits die Lichtverhältnisse jenseits der Brücke erfasst hat, "hell voraus" meldet. Handelt es sich jedoch nicht um eine Brücke, sondern um einen langgestreckten Tunnel oder ähnliches, melden bei der Einfahrt beide Sensoren "dunkel" beziehungsweise "dunkel voraus". Eine geeignet ausgelegte Auswerteeinrichtung ist in der Lage, anhand der unterschiedlichen Signalkombinationen, auf die richtige Situation zu schließen und die geeigneten Beleuchtungsmaßnahmen zu ergreifen.

Es ist bekannt, derartige Auswerteeinrichtungen als digitale Verarbeitungsvorrichtungen auszulegen, die über Digitalisierungsmittel verfügen, die die analogen Sensorsignale in geeignete, digitale Werte wandeln. Diese Wandlung erfolgt stets gemäß einer Kennlinie, die eine Abbildung des Definitionsbereichs der analogen Sensorwerte auf den Wertebereich der digitalisierten Werte repräsentiert. Dabei ist der Begriff der Digitalisierung hier nicht als auf den unmittelbaren Umwandlungsschritt eingeschränkt, sondern weit zu verstehen, derart, dass der gesamte Umwandlungsprozess von den analogen Sensorsignalen bis zu den von der Auswertesoftware verwendeten digitalen Daten eingeschlossen ist. Dieser Prozess kann unter Umständen mehrstufig und unter Einschluss verschiedener Umrechnungsschritte in der Software erfolgen.

Ein Nachteil des Standes der Technik besteht darin, dass die zuverlässige Unterscheidung unterschiedlicher Situationen sehr stark von den allgemeinen Lichtverhältnissen abhängig ist. So gelingt sie vergleichsweise leicht bei hellem, sonnigem Wetter, was zu starker Schattenbildung und daher erheblicher Kontrastschärfe führt. Fehlen derartige Kontraste, beispielsweise bei bewölkter Witterung oder Einbruch der Dämmerung, kann es vorkommen, dass beispielsweise beim Durchfahren einer Brücke der Richtungssensor noch immer Signale abgibt, die als "dunkel voraus" zu interpretieren sind, wenn der Globalsensor bereits "dunkel" meldet. In diesem Fall würde überflüssigerweise das Fahrlicht eingeschalten und kurz hinter der Brücke, wenn Richtungs- und Globalsensor wieder "hell" beziehungsweise "hell voraus" melden, ausgeschalten, was zu einem dem Gegenverkehr möglicherweise irritierender Blinkeffekt führt. Dem kann grundsätzlich mit der Anpassung der Auswertesoftware begegnet werden, die in Abhängigkeit von den globalen Lichtverhältnissen unterschiedliche Auswerteprogramme bereithält. Dies ist jedoch programmiertechnisch höchst aufwendig, da es sich bei den Auswerteprogrammen in der Regel um die Umsetzung komplexer Fuzzy-Logic-Methoden handelt.

### Vorteile der Erfindung

Die erfindungsgemäße Einrichtung gemäß Anspruch 1 baut auf dem Stand der Technik dadurch auf, dass in den Speichermitteln wenigstens eine zweite A/D-Wandlungskennlinie für den Richtungssensor gespeichert ist und die Digitalisierung des Richtungssensorsignals in Abhängigkeit von einem die allgemeinen Lichtverhältnisse repräsentierenden Signal gemäß der ersten oder der zweiten A/D-Wandlungskennlinie erfolgt. Auf diese Weise wird es möglich, in der Auswerteeinrichtung unabhängig von den allgemeinen Lichtverhältnissen stets dieselben Auswerteprogramme zu verwenden. Die Anpassung an die Lichtverhältnisse erfolgt vielmehr in dem vergleichsweise einfachen Digitalisierungsschritt durch Anwendung einer an die aktuellen Lichtverhältnisse angepassten A/D-Wandlungskennlinie. Derartige Kennlinien sind beispielsweise als wenig speicherintensive, beliebig gestaltbare Umwandlungstabellen speicherbar. Die Gestaltung der Tabellen kann aufgrund aktueller Berechnungen oder aus Erfahrungswerten erfolgen. Selbstverständlich ist es auch möglich, die Wandlungskennlinien als mathematische Funktionen zu speichern, was zwar den aktuellen Berechnungsaufwand steigert, dafür jedoch den Speicherbedarf weiter reduziert.

Die Erfindung gemäß Anspruch 2 ist besonders vorteilhaft gestaltet, da sich eine flachere Steigung der A/D-Wandlungskennlinien als Stauchung des zeitlichen Richtungssensorsignals etwa bei der Durchfahrt durch eine Brücke oder Unterführung auswirkt. Dadurch wird der durch die Dämmerung bedingten, unerwünschten Spreizung desselben Signals entgegengewirkt, so dass die Form des bei Dämmerung gemäß der zweiten A/D-Wandlungskennlinie digitalisierten zeitlichen Sensorsignals dem bei hellem Tageslicht gemäß der ersten A/D-Wandlungskennlinie digitalisierten angenähert wird. Die Auswertesoftware kann daher in beiden Fällen in etwa dasselbe Signal verarbeiten und zu denselben, richtigen Ergebnissen gelangen, ohne eine spezielle Programmanpassung gemäß der aktuellen Lichtverhältnisse durchführen zu müssen.

Die Vorteile der Weiterbildung der erfindungsgemäßen Einrichtung gemäß Anspruch 3 ist vor allem dadurch zu sehen, dass hierdurch nicht nur die Form sondern auch die absoluten Werte des digitalisierten Sensorsignals angepasst werden.

Die Maßnahme gemäß Anspruch 4 führt zwar zu einem Auflösungsverlust bei der Erfassung der Lichtverhältnisse durch den Sensor, führt aber zu der gewünschten Formänderung des zeitlichen Sensorsignals.

Die Vorteile der Weiterbildung der erfindungsgemäßen Einrichtung gemäß Anspruch 5 liegen darin, dass die A/D-Wandlungskennlinien eine besonders einfache Form erhalten, die sich besonders gut für die Speicherung in Form einer mathematischen Funktion eignet, da die Umrechnung schnell und einfach vonstatten gehen kann.

Gemäß Anspruch 6 wird die Erfindung derart vorteilhaft weitergebildet, dass zur Erfassung der allgemeinen Lichtverhältnisse kein gesonderter Sensor erforderlich ist, zugleich aber das die Umschaltung zwischen den Kennlinien veranlassende Signal zeitlich hinreichend stabil ist und nicht mit der kurzfristigen, aktuellen Abschattung des Fahrzeugs variiert.

### Zeichnungen

Die Erfindung wird nun unter Bezugnahme auf die beigefügten Zeichnungen anhand bevorzugter Ausführungsformen beispielhaft erläutert.

Es zeigen:
- Figur 1: schematische Darstellungen beispielhafter Sensorsignale bei unterschiedlichen Licht- / Digitalisierungsbedingungen;
- Figur 2: eine schematische Darstellung zweiter möglicher A/D-Wandlungskennlinien.

### Beschreibung der Ausführungsbeispiele

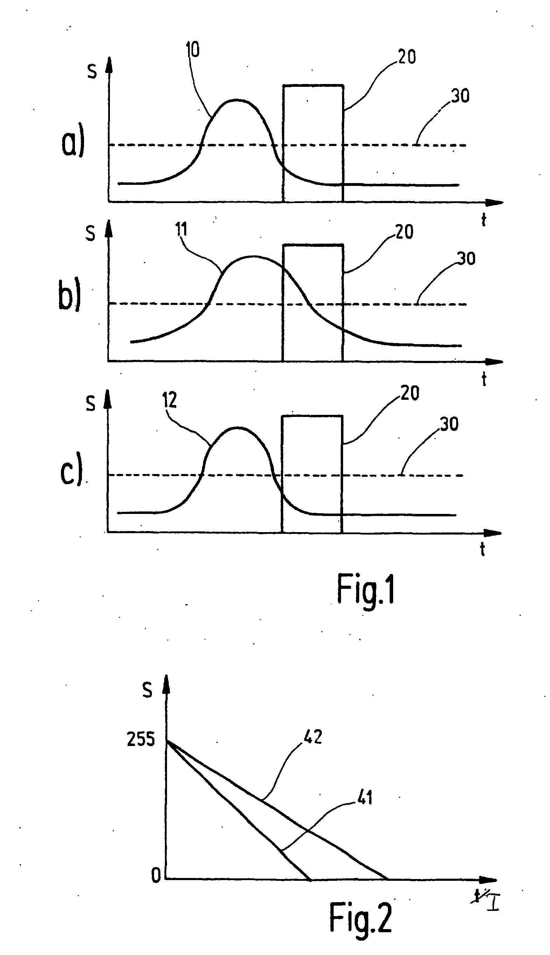

Figur 1a zeigt schematisch einen beispielhaften, zeitlichen Verlauf des Signals 10 S(t) eines Richtungssensors in Fahrtrichtung eines Kraftfahrzeuges bei Durchfahrt einer Brücke oder Unterführung 20. Bereits bei Anfahrt auf die Brücke 20 meldet der Richtungssensor "dunkel voraus". Dies ist durch die Steigerung des Signals 10 vor der Brücke 20 angedeutet. Dabei hebt sich das Signal 10 über einen Schwellenwert 30, der beispielsweise zur Unterscheidung von "hell" und "dunkel" verwendet werden kann. Selbstverständlich sind auch komplexere Unterscheidungsverfahren anwendbar. Das aus Gründen der Übersichtlichkeit nicht dargestellte Signal des Globalsensors hat sein Maximum etwa im Zentrum der Brücke 20. Figur 1a stellt den Signalverlauf 10 bei sonnigen Witterungsverhältnissen dar, bei denen starke Kontraste vorliegen. Aus Figur 1a ist deutlich erkennbar, dass das Signal 10 des Richtungssensors bei Einfahrt in die Unterführung bereits den Schwellenwert 30 wieder unterschritten hat, da es hier die hellen Lichtverhältnisse jenseits der Unterführung repräsentiert.

Figur 1b stellt dieselbe Situation wie Figur 1a dar, jedoch bei bedeckten Witterungsverhältnissen oder bei Einbruch der Dämmerung. Die Kontraste nehmen bei solchen Verhältnissen stark ab, so dass das Signal 11 des Richtungssensors unter diesen Umständen gespreizt wird. Daher liegt der Signalpegel des Signals 11 auch nach Einfahrt in die Unterführung noch über den Schwellenwert 30. Zu diesem Zeitpunkt meldet jedoch auch der Globalsensor "dunkel", was in Kombination zu einem Einschalten der Fahrzeugscheinwerfer führen würde. Da diese jedoch unmittelbar hinter der Unterführung aufgrund der dort herrschenden Lichtverhältnisse ausgeschaltet werden, handelt es sich dabei um einen unerwünschten Blinkeffekt.

Die Signale 10 und 11 ergeben sich bei Digitalisierung des analogen Richtungssensorssignals gemäß der A/D-Wandlungskennlinie 41 in Figur 2. In Figur 2 sind zwei unterschiedliche A/D-Wandlungskennlinien dargestellt, in Form eines mit 8 Bit Tiefe digitalisierten Signals S als Funktion der erfassten Intensität I. Wird bei der in Figur 1b dargestellten Situation statt der Kennlinie 41 die flachere Wandlungskennlinie 42 verwendet, ergibt sich das in Figur 1c dargestellte Signal 12, das im Wesentlichen dem in Figur 1a dargestellten Signal 10 entspricht. Die durch die Kontrastverschlechterung hervorgerufene Spreizung des Signals 11 wird in Figur 1c kompensiert durch die Stauchung des Signals 12, die durch die Verwendung der flacheren Kennlinie 42 hervorgerufen wird.

Das Umschalten zwischen den Wandlungskennlinien 41, 42 kann auf einfache Weise auf Basis des Globalsensorsignals, vorzugsweise eines hieraus berechneten, möglichst langfristigen Mittelwertes erfolgen, der die allgemeinen Umgebungslichtverhältnisse wiederspiegelt.

Während die Erfindung insbesondere mit Bezug auf einige bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Ansprüche sind verschiedene Änderungen und Modifikationen möglich, ohne den Umfang der Erfindung zu verlassen.

## Patentansprüche

1. Einrichtung zum automatischen Schalten von Beleuchtungseinrichtungen bei einem Fahrzeug mit einer Sensoreinrichtung, umfassend wenigstens einen Richtungssensor zur gerichteten Erfassung der Lichtverhältnisse in Fahrtrichtung des Fahrzeugs und wenigstens einen Globalsensor zur ungerichteten Erfassung der Lichtverhältnisse in der Umgebung des Fahrzeugs, sowie mit einer mit der Sensoreinrichtung verbundenen Auswerteeinrichtung zur Ermittlung auf Grundlage der erfassten Lichtverhältnisse, ob eine Schaltzustandsänderung der Beleuchtungseinrichtungen erforderlich ist, wobei die Auswerteeinrichtung Digitalisierungsmittel umfasst zur Digitalisierung wenigstens des Richtungssensorsignals (10, 11) gemäß einer in Speichermitteln der Auswerteeinrichtung gespeicherten ersten A/D-Wandlungskennlinie (41) **dadurch gekennzeichnet, dass** in den Speichermitteln wenigstens eine zweite A/D-Wandlungskennlinie für den Richtungssensor gespeichert ist und dass die Einrichtung so ausgeführt ist, dass die Digitalisierung des Richtungssensorsignals (10, 11; 12) in Abhängigkeit von einem die allgemeinen Lichtverhältnisses repräsentierenden Signal gemäß der ersten (41) oder der zweiten A/D-Wandlungskennlinie (42) erfolgt.

2. Einrichtung nach Anspruch 1, **dadurch gekennzeichnet, dass** die erste A/D-Wandlungskennlinie einem hellere allgemeine Umgebungslichtverhältnisse repräsentierenden Signal eines geeigneten Sensors zugeordnet ist, die zweite A/D-Wandlungskennlinie einem dunklere Umgebungslichtverhältnisse repräsentierenden Signal desselben Sensors zugeordnet ist und die zweite A/D-Wandlungskennlinie (42) eine flachere Steigung aufweist als die erste A/D-Wandlungskennlinie (41).

3. Einrichtung nach einem der vorangehenden Ansprüche, **dadurch gekennzeichnet, dass** der Wertebereich der ersten (41) und der zweiten A/D-Wandlungskennlinien (42) derselbe ist.

4. Einrichtung nach einem der vorangehenden Ansprüche, **dadurch gekennzeichnet, dass** der Definitionsbereich der zweiten A/D-Wandlungskennlinie (42) im Bereich hohe Lichtintensitäten repräsentierender Sensorsignale gegenüber dem Definitionsbereich der ersten A/D-Wandlungskennlinie (41) erweitert ist.

5. Einrichtung nach einem der vorangehenden Ansprüche, **dadurch gekennzeichnet, dass** die erste (41) und die zweite A/D-Wandlungskennlinie (42) jeweils einen im Wesentlichen linearen Zusammenhang zwischen der erfassten Lichtintensität (I) und dem digitalisierten Wert (S) repräsentieren.

6. Einrichtung nach einem der vorangehenden Ansprüchen **dadurch gekennzeichnet, dass** das die allgemeinen Lichtverhältnisse repräsentierende Signal ein langfristiger zeitlicher Mittelwert des Globalsensorsignals ist.

## Claims

1. Device for automatically switching lighting devices in a vehicle with a sensor device, comprising at least one direction sensor for detecting the light conditions in the direction of travel of the vehicle in a directed manner and at least one global sensor for detecting the light conditions in the area surrounding the vehicle in a non-directed manner, and having an evaluation device which is connected to the sensor device and is intended to determine, on the basis of the detected light conditions, whether it is necessary to change the switching state of the lighting devices, the evaluation device comprising digitization means for digitizing at least the direction sensor signal (10, 11) according to a first A/D conversion characteristic curve (41) stored in memory means of the evaluation device, **characterized in that** at least one second A/D conversion characteristic curve for the direction sensor is stored in the memory means, and **in that** the device is configured in such a manner that the direction sensor signal (10, 11; 12) is digitized on the basis of a signal representing the general light conditions according to the first A/D conversion characteristic curve (41) or the second A/D conversion characteristic curve (42).

2. Device according to Claim 1, **characterized in that** the first A/D conversion characteristic curve is associated with a signal from a suitable sensor, which signal represents brighter general ambient light conditions, the second A/D conversion characteristic curve is associated with a signal from the same sensor, which signal represents darker ambient light conditions, and the second A/D conversion characteristic curve (42) has a flatter gradient than the first A/D conversion characteristic curve (41).

3. Device according to one of the preceding claims, **characterized in that** the range of values of the first A/D conversion characteristic curve (41) and the range values of the second A/D conversion characteristic curve (42) are the same.

4. Device according to one of the preceding claims, **characterized in that** the definition range of the second A/D conversion characteristic curve (42) is extended, in the region of sensor signals which represent high light intensities, with respect to the definition range of the first A/D conversion characteristic curve (41).

5. Device according to one of the preceding claims, **characterized in that** the first A/D conversion characteristic curve (41) and the second A/D conversion characteristic curve (42) each represent a substantially linear relationship between the detected light intensity (I) and the digitized value (S).

6. Device according to one of the preceding claims, **characterized in that** the signal representing the general light conditions is a long-term temporal average of the global sensor signal.

## Revendications

1. Dispositif de branchement automatique de dispositifs d'éclairage d'un véhicule doté d'un dispositif de détection et comprenant au moins un détecteur directionnel qui détecte de manière orientée les conditions d'éclairage dans la direction d'avancement du véhicule et au moins un détecteur global qui détecte de manière non directionnelle les conditions d'éclairage de l'environnement du véhicule et
d'un dispositif d'évaluation relié au dispositif de détection qui détermine sur la base des conditions d'éclairage détectées si une modification de l'état de commutation des dispositifs d'éclairage est nécessaire,
le dispositif d'évaluation comprenant des moyens de numérisation qui numérisent au moins le signal (10, 11) du détecteur directionnel selon une première ligne caractéristique (41) de conversion A/N conservée en mémoire dans des moyens de mémoire du dispositif d'évaluation,
**caractérisé en ce**
**qu'**au moins une deuxième ligne caractéristique de conversion A/N prévue pour le détecteur directionnel est conservée dans les moyens de mémoire et
en ce que le dispositif est réalisé de telle sorte que la numérisation du signal (10, 11; 12) du détecteur directionnel s'effectue selon la première ligne caractéristique (41) ou la deuxième ligne caractéristique (42) de conversion A/N en fonction d'un signal qui représente les conditions générales d'éclairage.

2. Dispositif selon la revendication 1, **caractérisé en ce que** la première ligne caractéristique de conversion A/N est associée à un signal d'un détecteur approprié qui représente des conditions générales plus lumineuses d'éclairage ambiant, **en ce que** la deuxième caractéristique de conversion A/N est associée à un signal du même détecteur qui représente des conditions plus sombres d'éclairage ambiant et **en ce que** la deuxième ligne caractéristique (42) de conversion A/N a une pente moins accusée que la première ligne caractéristique (41) de conversion A/N.

3. Dispositif selon l'une des revendications précédentes, **caractérisé en ce que** la première ligne caractéristique (41) et la deuxième ligne caractéristique (42) de conversion A/N ont toutes deux la même plage de valeurs.

4. Dispositif selon l'une des revendications précédentes, **caractérisé en ce que**, dans la zone des signaux de détecteurs qui représentent de hautes intensités lumineuses, la plage de définition de la deuxième ligne caractéristique (42) de conversion A/N est agrandie par rapport à la plage de définition de la première ligne caractéristique (41) de conversion A/N.

5. Dispositif selon l'une des revendications précédentes, **caractérisé en ce que** la première ligne caractéristique (41) et la deuxième ligne caractéristique (42) de conversion A/N représentent toutes deux une relation essentiellement linéaire entre l'intensité détectée (I) de la lumière et la valeur numérisée (S).

6. Dispositif selon l'une des revendications précédentes, **caractérisé en ce que** le signal qui représente les conditions générales d'éclairage est une valeur moyenne, calculée sur une longue durée, du signal du détecteur global.
